# EUROPÄISCHE PATENTSCHRIFT

(11) **EP 1 413 910 B1**
(45) Veröffentlichungstag und Bekanntmachung des Hinweises auf die Patenterteilung: **31.08.2005**
(21) Anmeldenummer: 03023254.0
(22) Anmeldetag: 14.10.2003
(51) Int. Cl.: G02B 21/24

(54) **Mikroskop mit Transpondern**
Microscope with transponders
Microscope avec transpondeurs

(30) Priorität: 22.10.2002 DE 10249904
(43) Veröffentlichungstag der Anmeldung: 28.04.2004
(73) Patentinhaber: Leica Microsystems (Schweiz) AG, 9435 Heerbrugg (CH)
(72) Erfinder: Studer, Heinz, 6721 Blons 92 (AT); Hiller, Ewald, 6580 Dornbirn (AT)
(74) Vertreter: Hössle Kudlek & Partner

(56) Entgegenhaltungen:
- EP-A- 1 205 780
- WO-A-01/94016
- US-A1- 2002 030 598
- US-B1- 6 300 639
- US-B1- 6 343 690

## Beschreibung

Die Erfindung betrifft ein Mikroskop mit einer Leseeinheit zum Lesen von in Transpondern abgelegten Daten und einen Filterträger für ein solches Mikroskop. Die Erfindung betrifft weiterhin ein Verfahren zur Durchführung von Untersuchungen bzw. Messungen mit einem Mikroskop sowie ein Computerprogramm und ein Computerprogrammprodukt zur Ausführung des erfindungsgemäßen Verfahrens.

Bei bekannten Mikroskopen können verschiedene optische Baugruppen, wie bspw. Filter, Präparate und Objektive, zum Einsatz kommen, wobei die für die Anwendung benötigten Baugruppen in den Strahlengang einzubringen sind. Während eines Meßdurchgangs kann es gegebenenfalls notwendig sein, optische Baugruppen auszutauschen. Um dieses Austauschen zu erleichtern, haben sich sogenannte Magazine bewährt, die zur gleichzeitigen Aufnahme mehrerer Baugruppen dienen.

Diese Magazine weisen in der Regel eine Anzahl von Aufnahmebereichen auf, in denen die Baugruppen eingesetzt werden können. Zweckmäßig ist es, jeweils ein Magazin für die Filter, die Präparate und die Objektive einzusetzen.

Auf diese Weise können z. B. sämtliche in einem Untersuchungsablauf benötigten Filter auf einem Magazin, einem sogenannten Filterrad, untergebracht werden. Dieses Filterrad kann per Hand oder mit einem Motor verstellbar sein, so dass je nach Bedarf das benötigte Filter in den Strahlengang eingebracht werden kann.

Bei Fluoreszenzmessungen ist es bspw. aus Sicherheitsgründen notwendig, Filter in den Strahlengang einzubringen, um den Betrachter zu schützen. Bei einer solchen Untersuchung muß gewährleistet sein, dass sich das richtige Filter im Strahlengang befindet, bevor ein Shutter geöffnet wird. Nur wenn das geeignete Filter im Strahlengang ist, darf der Shutter geöffnet werden. Zur Kennzeichnung der Filter ist es bekannt, diese zu beschriften. Die Beschriftung und die entsprechenden kennzeichnenden Eigenschaftsangaben werden per Hand in eine Datenbank eingegeben. Die Aktualität dieser Datenbank muß stets überprüft werden, insbesondere im Falle von Änderungen der Filtercharakteristik, um Verwechslungen zu vermeiden. Bei automatisierten Abläufen ist es notwenig, die Filter am richtigen Platz in das Magazin einzuordnen. Eine Überprüfung der kennzeichnenden Eigenschaftsdaten in der Datenbank kann im automatischen Betrieb gar nicht erfolgen. Gerade bei automatisierten Abläufen muß aber gewährleistet sein, dass die Applikation automatisch abgebrochen bzw. nicht gestartet wird, wenn eine inkorrekte Kombination von Baugruppen sich im Strahlengang befindet.

Aus der EP-A-1 205 780 ist ein Mikroskop mit Objektivrevolver bekannt, bei dem jedem Objektiv ein Transponder zugeordnet ist. Eine am Stativ vorgesehene Leseeinrichtung für die Transponder ermittelt, ob das gewünschte Objektiv in der gewünschten Position ist. Diese Kennzeichnung dient hier dem Zweck, andere Mikroskopkomponenten dem gewählten Objektiv entsprechend anzupassen. Die Steuerung einer Mikroskopuntersuchung, zu der Filter und ein Shutter eingesetzt werden, ist in dieser Schrift nicht angesprochen.

Aufgabe der vorliegenden Erfindung ist es daher, ein Mikroskop bereitzustellen, dass die gestellten Anforderungen an die Sicherheit erfüllt und einen zuverlässigen automatisierten Betrieb ermöglicht.

Die Aufgabe wird gelöst durch ein Mikroskop, gemäß Anspruch 1.

Die Leseeinheit erfaßt jederzeit die Daten der Transponder, die den zu diesem Zeitpunkt im Strahlengang befindlichen Filtern zugeordnet sind. Bei einer Fluoreszenzmessung wird bspw. zunächst überprüft, ob das benötigte Filter im Strahlengang eingebracht ist. Erst wenn sichergestellt ist, dass das richtige Filter im Beobachtungs- und Beleuchtungsstrahlengang ist, wird der elektrisch betätigbare Shutter geöffnet.

In Ausgestaltung des erfindungsgemäßen Mikroskops ist eine Schreibeinheit vorgesehen, die zum Schreiben von Daten in die Transponder dient. Mit dieser Schreibeinheit können Daten in Transponder eingeschrieben werden. Vorzugsweise wird eine kombinierte Lese- Schreibeinheit eingesetzt.

Das erfindungsgemäße Mikroskop ermöglicht somit eine berührungslose Filteridentifikation, wobei eine bidirektionale Datenübertragung möglich ist. Auf diese Weise ist es bspw. möglich festzustellen, wie oft ein bestimmtes Präparat untersucht wurde, um gegebenenfalls bei Überschreiten einer vorgebbaren Schwelle die Messung abzubrechen.

Das Filterrad ist vorzugsweise mit einem Motor einzustellen.

Vorzugsweise ist eine Steuereinheit zum Steuern der Abläufe in Abhängigkeit der gelesenen Daten vorgesehen.

Das erfindungsgemäße Mikroskop eignet sich insbesondere für Fluoreszenzmessungen und kann als Stereomikroskop ausgebildet sein. In diesem Fall wird im sogenannten Fluoreszenzmodul des Mikroskops eine Schreib- Leseeinheit in die Elektronik eingebaut und auf den Filterträgern werden die Transponder angebracht. Wird das Filter in die Position des visuellen Strahlengangs gedreht, sendet die Schreib- Leseeinheit die Identifikationsanforderung an den Transponder bzw. an das elektronische Etikett, das die Energieversorgung üblicherweise dem elektrischen Feld entnimmt und anschließend die spezifischen Filtereckdaten an die Schreib-Leseeinheit zurückübermittelt. Die Daten können dann von einer elektronischen Recheneinheit, bspw. einem Mikrocontroller, in dem Steuergerät auf ein internes Bussystem gelegt werden und stehen somit der Applikationssoftware zur Verfügung.

Das erfindungsgemäße Verfahren zur Durchführung von Untersuchungen bzw. Messungen mit einem Mikroskop mit einer Leseeinheit zum Lesen von in Transpondern abgelegten Daten ist in Anspruch 7 angegeben.

Wird festgestellt, dass eine inkorrekte Kombination an Baugruppen oder ein nicht geeigneter Filter im Strahlengang eingebracht ist, kann die Untersuchung abgebrochen werden. Bei einer Fluoreszenzmessung bspw. wird der verwendete Shutter in Abhängigkeit der eingelesenen Daten betätigt.

In Ausgestaltung des erfindungsgemäßen Verfahrens werden mittels einer Schreibeinheit Daten in Transponder geschrieben.

Die eingelesenen Daten können auch in einer Speichereinheit abgelegt werden. Der aktuelle Betriebszustand kann dann zu einem späteren Zeitpunkt rekonstruiert werden, da die Komponenten durch die Transponder erkannt werden und diese Information gespeichert werden kann. Der Einsatz der Transponder kann auch zur Betriebsdatenerfassung herangezogen werden, die für statistische Auswertungen, wie bspw. die Filterlebensdauer oder die Anzahl der Untersuchungen eines bestimmten Präparats, verwendet werden können.

Das erfindungsgemäße Computerprogramm umfaßt Programmcodemittel, um alle Schritte des erfindungsgemäßen Verfahrens durchzuführen, wenn das Computerprogramm auf einem Computer oder einer entsprechenden Recheneinheit, insbesondere eine Recheneinheit in einem Steuergerät zum Steuern der Abläufe bei einem Mikroskop, zur Ausführung kommt.

Das erfindungsgemäße Computerprogrammprodukt weist diese Programmcodemittel auf, die auf einem computerlesbaren Datenträger gespeichert sind.

Die Erfindung ermöglicht die automatische Erkennung der in einem Filterrad eingesetzten Filter in einem motorisierten Stereomikroskop. Eine berührungslose Filteridentifikation der im Filterrad bzw. Filterrevolver befindlichen Sperr- und Erregerfilter ist somit möglich. Auch eine bidirektionale Datenübertragung im Vollduplex-Betrieb kann durchgeführt werden. Ausgelesene Daten können in einem nichtflüchtigen, schreibgeschützten Speicher abgelegt werden. Als zusätzliche Sicherungsmaßnahme können die Daten verschlüsselt vorliegen. Im Gegensatz zu der bekannten Beschriftung von Filtern können auch zusätzliche Informationen, wie bspw. Toleranzangaben, abgelegt werden. Eine Datenpflege ist nicht erforderlich, da die Daten automatisch aktualisiert werden.

Das erfindungsgemäße Mikroskop weist einen einfachen Aufbau mit kleinen Abmessungen auf. Es eignet sich insbesondere für automatisierte Meßfolgen, weil die erfaßten Daten, die die verwendeten Baugruppen kennzeichnen, als Steuersignale dienen und einen sicheren zuverlässigen Betrieb des Mikroskops gewährleisten.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung ausführlich beschrieben.
- Figur 1: zeigt eine bevorzugte Ausführungsform des erfindungsgemäßen Mikroskops in schematischer Darstellung.
- Figur 2: zeigt ein Filterrad als Beispiel eines gefüllten Magazins des erfindungsgemäßen Mikroskops in schematischer Darstellung.

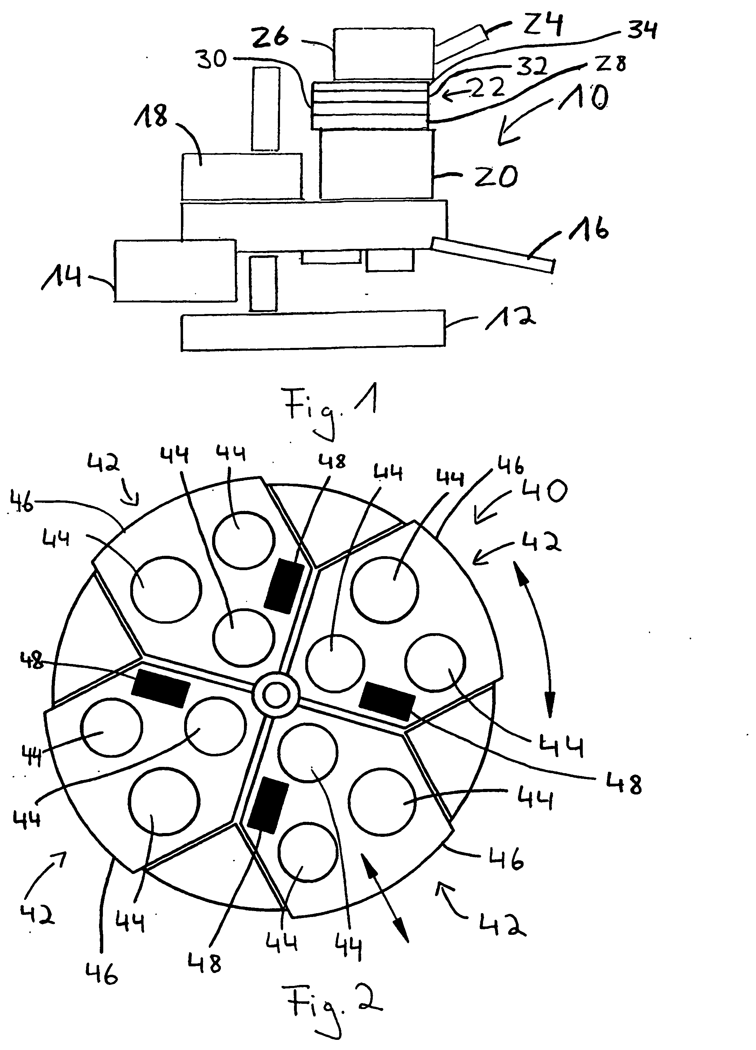

In Figur 1 ist eine bevorzugte Ausführungsform des erfindungsgemäßen Mikroskops, insgesamt mit der Bezugsziffer 10 bezeichnet, dargestellt.

Zu erkennen ist eine motorisierte Basis 12, eine automatisierte Beleuchtungseinheit 14, ein schwenkbares UV-Filter 16, eine Motorfokus-Einheit 18, eine motorbetriebene Zoom-Einheit 20, eine Fluoreszenz-Einheit 22, ein Okular 24 und ein Tubus 26.

In der Fluoreszenz-Einheit 22 befindet sich ein Shutter 28, ein Filterrad 30 mit Filtern, denen Transponder zugeordnet sind, eine Schreib- Leseeinheit 32 und eine elektronische Steuereinheit 34. Die Schreib- Leseeinheit 32 liest nach Abgabe einer Identifikationsanforderung Daten des Transponders ein, der dem im Strahlengang befindlichen Filter zugeordnet ist. Diese Daten werden an die Steuereinheit 34 weitergegeben und dann auf das interne Bussystem gelegt und stehen somit der Applikationssoftware zur Verfügung.

Wird festgestellt, dass sich ein für die vorgesehene Untersuchung geeignetes Filter im Strahlengang befindet, wird der Shutter 28 geöffnet. Ist dies nicht der Fall, wird der Ablauf nicht gestartet oder automatisch abgebrochen.

In Figur 2 ist ein Filterrad 40 als Beispiel eines gefüllten Magazins des erfindungsgemäßen Mikroskops in Draufsicht schematisch dargestellt.

Das Filterrad 40 weist vier Aufnahmebereiche 42 auf, in die jeweils ein mit Filtern 44 bestückter Filterträger 46 eingesetzt ist. Auf jedem der Filterträger 46 ist ein Transponder 48 vorgesehen. Diese Transponder 48 sind folglich den Filtern 44 zugeordnet.

### Bezugszeichenliste

- 10: Mikroskop
- 12: Basis
- 14: Beleuchtungseinheit
- 16: UV-Filter
- 18: Motorfokus-Einheit
- 20: Zoom-Einheit
- 22: Fluoreszenz-Einheit
- 24: Okular
- 26: Tubus
- 28: Shutter
- 30: Filterrad
- 32: Schreib- Leseeinheit
- 34: Steuereinheit
- 40: Filterrad
- 42: Aufnahmebereich
- 44: Filter
- 46: Filterträger
- 48: Transponder

## Patentansprüche

1. Mikroskop, das eine Leseeinheit zum Lesen von in Transpondern abgelegten Daten aufweist, **dadurch gekennzeichnet, dass** mindestens ein Filterrad oder - revolver (40) mit Aufnahmebereichen (42) zur Aufnahme von Filtern (44) vorgesehen ist, dass den in den Aufnahmebereichen (42) aufgenommenen Filtern (44) Transponder (48) zugeordnet sind, und dass ein elektrisch betätigbarer Shutter (28) vorgesehen ist, der in Abhängigkeit von den von der Leseeinheit (32) eingelesenen Daten derart zu betätigen ist, dass der Shutter (28) erst dann geöffnet werden kann, wenn sich das richtige Filter (44) im Strahlengang befindet.

2. Mikroskop nach Anspruch 1, **dadurch gekennzeichnet, dass** eine Schreibeinheit zum Schreiben von Daten in die Transponder (48) vorgesehen ist.

3. Mikroskop nach Anspruch 1 oder 2, **dadurch gekennzeichnet, dass** das Filterrad (40) mittels eines Motors einzustellen ist.

4. Mikroskop nach einem der Ansprüche 1 bis 3, **dadurch gekennzeichnet, dass** eine elektronische Steuereinheit (34) zum Steuern der Abläufe in Abhängigkeit der von den Transpondern (48) eingelesenen Daten vorgesehen ist.

5. Mikroskop nach einem der Ansprüche 1 bis 4, das für Fluoreszenzmessungen ausgelegt ist.

6. Mikroskop nach einem der Ansprüche 1 bis 5, das als Stereomikroskop ausgebildet ist.

7. Verfahren zur Durchführung von Untersuchungen mit einem Mikroskop (10), das eine Leseeinheit zum Lesen von in Transpondern abgelegten Daten aufweist, **dadurch gekennzeichnet, dass** im Mikroskop mindestens ein Filterrad oder -revolver (40) mit Aufnahmebereichen (42) zur Aufnahme von Filtern (44) vorgesehen ist, und dass Transponder (48), die den in den Aufnahmebereichen eingebrachten Filtern (44) zugeordnet sind, mit der Leseeinheit (32) ausgelesen werden und entsprechend den ausgelesenen Daten die Untersuchung durchgeführt wird, wobei ein Shutter (28) in Abhängigkeit der eingelesenen Daten derart betätigt wird, dass dieser erst dann geöffnet werden kann, wenn sich das richtige Filter (44) im Strahlengang befindet.

8. Verfahren nach Anspruch 7, **dadurch gekennzeichnet, dass** das Verfahren nach Einlesen der Daten abgebrochen wird, wenn sich ein für das gewählte Verfahren nicht geeignetes Filter (44) im Strahlengang befindet.

9. Verfahren nach Anspruch 7 oder 8, **dadurch gekennzeichnet, dass** mittels einer Schreibeinheit Daten in die Transponder (48) geschrieben werden.

10. Verfahren nach einem der Ansprüche 7 bis 9, **dadurch gekennzeichnet, dass** eine Fluoreszenzmessung durchgeführt wird.

11. Verfahren nach einem der Ansprüche 7 bis 10, **dadurch gekennzeichnet, dass** die eingelesenen Daten abgespeichert werden.

12. Verfahren nach Anspruch 11, bei dem die abgespeicherten Daten zur Betriebsdatenerfassung herangezogen werden.

13. Computerprogramm mit Programmcodemitteln, um alle Schritte eines Verfahrens nach einem der Ansprüche 7 bis 12 durchzuführen, wenn das Computerprogramm auf einem Computer oder einer entsprechenden Recheneinheit, insbesondere einer Recheneinheit in einem Steuergerät (34) gemäß Anspruch 4, ausgeführt wird.

14. Computerprogrammprodukt mit Programmcodemitteln, die auf einem computerlesbaren Datenträger gespeichert sind, um ein Verfahren nach einem der Ansprüche 7 bis 12 durchzuführen, wenn das Computerprogramm auf einem Computer oder einer entsprechenden Recheneinheit, insbesondere einer Recheneinheit in einem Steuergerät (34) gemäß Anspruch 4, ausgeführt wird.

## Claims

1. Microscope which comprises a reading unit for reading data deposited in transponders, **characterised in that** at least one filter wheel or revolver (40) having receiving areas (42) for accommodating filters (44) is provided, **in that** transponders (48) are associated with the filters (44) held in the receiving areas (42), and **in that** an electrically operated shutter (28) is provided which is to be operated, as a function of the data read in by the reading unit (32), such that the shutter (28) can only be opened when the correct filter (44) is located in the optical path.

2. Microscope according to claim 1, **characterised in that** a writing unit is provided for writing data into the transponders (48).

3. Microscope according to claim 1 or 2, **characterised in that** the filter wheel (40) is adjustable by means of a motor.

4. Microscope according to one of claims 1 to 3, **characterised in that** an electronic control unit (34) is provided for controlling the operations as a function of the data read in from the transponders (48).

5. Microscope according to one of claims 1 to 4 which is designed for fluorescence measurements.

6. Microscope according to one of claims 1 to 5 which is configured as a stereomicroscope.

7. Process for carrying out investigations with a microscope (10) which comprises a reading unit for reading data stored in transponders, **characterised in that** at least one filter wheel or revolver (40) having receiving areas (42) for accommodating filters (44) is provided in the microscope and **in that** transponders (48) which are associated with the filters (44) placed in the receiving areas are read out by means of the reading unit (32) and the investigation is carried out in accordance with the data read out, a shutter (28) being operated as a function of the data read in such that this shutter can only be opened when the correct filter (44) is in the optical path.

8. Process according to claim 7, **characterised in that** the process is stopped after the reading in of the data if a filter (44) which is unsuitable for the selected process is located in the optical path.

9. Process according to claim 7 or 8, **characterised in that** data is written into the transponders (48) by means of a writing unit.

10. Process according to one of claims 7 to 9, **characterised in that** a fluorescence measurement is carried out.

11. Process according to one of claims 7 to 10, **characterised in that** the data read in are stored.

12. Process according to claim 11, wherein the stored data are used for detecting operational data.

13. Computer programme with programme coding means for carrying out all the steps of a process according to one of claims 7 to 12 when the computer programme is run on a computer or a corresponding computing unit, particularly a computing unit in a control apparatus (34) according to claim 4.

14. Computer programming product with programme coding means which are stored on a computer readable data carrier for carrying out a process according to one of claims 7 to 12 when the computer programme is run on a computer or a corresponding computing unit, particularly a computing unit in a control apparatus (34) according to claim 4.

## Revendications

1. Microscope qui comprend une unité de lecture pour lire des données déposées dans des transpondeurs, **caractérisé en ce qu'**il est prévu au moins une roue ou une tourelle à filtres (40) présentant des zones de réception (42) pour recevoir des filtres (44), **en ce que** des transpondeurs (48) sont associés aux filtres (44) reçus dans les zones de réception (42), et **en ce qu'**il est prévu un obturateur (28) à actionnement électrique qui est à actionner en fonction des données lues par l'unité de lecture (32) de telle sorte que l'obturateur (28) ne peut être ouvert que lorsque le filtre correct (44) se trouve dans la trajectoire des rayons.

2. Microscope selon la revendication 1, **caractérisé en ce qu'**il est prévu une unité d'écriture pour écrire des données dans les transpondeurs (48).

3. Microscope selon l'une ou l'autre des revendications 1 et 2, **caractérisé en ce que** la roue à filtres (40) est réglable au moyen d'un moteur.

4. Microscope selon l'une des revendications 1 à 3, **caractérisé en ce qu'**il est prévu une unité de commande électronique (34) pour commander les déroulements en fonction des données lues par les transpondeurs (48).

5. Microscope selon l'une des revendications 1 à 4, qui est conçu pour des mesures de fluorescence.

6. Microscope selon l'une des revendications 1 à 5, qui est réalisé sous forme de stéréo-microscope.

7. Procédé pour exécuter des examens au moyen d'un microscope (10) qui comprend une unité de lecture pour lire des données déposées dans des transpondeurs, **caractérisé en ce que** dans le microscope est prévu au moins une roue ou une tourelle à filtres (40) présentant des zones de réception (42) pour recevoir des filtres (44), **en ce que** des transpondeurs (48) qui sont associés aux filtres (44) reçus dans les zones de réception (42) sont lus par l'unité de lecture (32), et l'examen est exécuté en correspondance des données lues, un obturateur (28) étant actionné en fonction des données lues de telle sorte que celui-ci ne peut être ouvert que lorsque le filtre correct (44) se trouve dans la trajectoire des rayons.

8. Procédé selon la revendication 7, **caractérisé en ce qu'**après la lecture des données le procédé est interrompu si ce n'est pas le filtre (44) approprié pour le procédé choisi qui se trouve dans la trajectoire des rayons.

9. Procédé selon l'une ou l'autre des revendications 7 et 8, **caractérisé en ce que** des données sont écrites dans les transpondeurs (48) au moyen d'une unité d'écriture.

10. Procédé selon l'une des revendications 7 à 9, **caractérisé en ce que** l'on effectue une mesure de fluorescence.

11. Procédé selon l'une des revendications 7 à 10, **caractérisé en ce que** les données lues sont mémorisées.

12. Procédé selon la revendication 11, dans lequel les données mémorisées sont exploitées pour la saisie des données de opération.

13. Programme d'ordinateur présentant des moyens formant code de programme pour mettre en oeuvre toutes les étapes d'un procédé selon l'une des revendication 7 à 12, lorsque le programme d'ordinateur est exécuté sur un ordinateur ou sur une unité de calcul correspondante, en particulier sur une unité de calcul dans un appareil de commande (34) selon la revendication 4.

14. Produit de programme d'ordinateur présentant des moyens formant code de programme qui sont mémorisés sur un support de données lisibles à l'ordinateur, pour mettre en oeuvre un procédé selon l'une des revendication 7 à 12, lorsque le programme d'ordinateur est exécuté sur un ordinateur ou sur une unité de calcul correspondante, en particulier sur une unité de calcul dans un appareil de commande (34) selon la revendication 4.
